# EUROPEAN PATENT APPLICATION

(11) **EP 4 155 526 A1**
(43) Date of publication of application: **29.03.2023**
(21) Application number: 21199154.2
(22) Date of filing: 27.09.2021
(51) Int. Cl.: F02M 26/20, F02M 21/02, F02M 21/06

(54) **FUEL ADMISSION NOZZLE**

(71) Applicant: Winterthur Gas & Diesel Ltd., 8401 Winterthur (CH)
(72) Inventor: Schneiter, Dominik, 8308 Illnau (CH); Unfug, Fridolin, 8408 Winterthur (CH)
(74) Representative: Hepp Wenger Ryffel AG

(57) **Abstract**

The present invention relates to an internal combustion engine (100) comprising a fuel admission nozzle, a fuel admission nozzle and a method for feeding fuel gas to a combustion chamber of an internal combustion engine and a method of manufacturing a fuel admission nozzle. The Internal combustion engine (100) has at least one cylinder (1), namely a large vessel engine with at least one cylinder (1) having an inner diameter of at least 200mm, preferably a low pressure fuel gas engine or dual-fuel engine with a cylinder (1). The internal combustion engine (100) has at least one fuel admission nozzle (10) for injecting low pressure fuel fluid directly into the cylinder (1) through a cylinder wall (2). The fuel admission nozzle (10) comprises at least one fuel fluid feedline (11) fluidly connected or connectable to a fuel feed conduit (21) and at least one inert gas feedline (12) fluidly connected or connectable to an inert gas feed conduit (22).

## Description

The present invention relates to an internal combustion engine comprising a fuel admission nozzle, a fuel admission nozzle and a method for feeding fuel gas to a combustion chamber of an internal combustion engine and a method of manufacturing a fuel admission nozzle.

The present invention relates to an internal combustion engine like a large marine or ship engine or a stationary engine whose cylinders have an inner diameter of at least 200 mm. The engine preferably is a two-stroke engine or a two-stroke cross head engine. The engine can be a gas engine, a dual fuel or a multi fuel engine. Burning of liquid and or gaseous fuels in such engines is possible as well as self-igniting or forced igniting.

The term internal combustion engine includes in particular dual-fuel engines, large engines in which the self-ignition and combustion of a first fuel is used for the positive ignition of a second fuel.

The term internal combustion engine also includes a pure gas engine which is ignited with a spark plug.

The engine has at least one cylinder having a piston therein. The piston is connected to a crankshaft. The piston reciprocates between a top dead center (TDC) and a bottom dead center (BDC) during operation of the engine. The cylinder typically has at least one air passage opening for intake, the air inlet in particular arranged in the liner of the cylinder, and at least one air passage opening for exhaust, the exhaust outlet in particular arranged in the cover of the cylinder.

The air inlet may be used for intake of a mixture of fresh air and exhaust gas as a scavenge gas.

The internal combustion engine can be a longitudinally flushed two-stroke engine.

Engine speed is preferably below 800 RPM (4-stroke) and more preferably below 200 RPM (2-stroke) which indicates the designation of low speed engines.

Fuel gases can be gases like liquid natural gas (LNG), liquid petrol gas (LPG), methanol or ethanol, and so on. Further possible fuels which might be added on request are: LBG (Liquified Biogas), biological Fuels (e. g. Algae fuel or Seaweed Oil), hydrogen or ammonia, as well as synthetic fuels (e. g. made by Power-To-Gas or Power-To-Liquid).

The internal combustion engine can alternatively be driven by diesel or marine diesel oils or heavy fuel oils or emulsions or slurries.

Large ships, in particular vessels for transport of goods, usually are powered by internal combustion engines, in particular gas engines and/or dual fuel engines, mostly two-stroke, cross head engines. In case of liquid fuel, like heavy fuel oil, marine diesel oil, diesel or other liquids, as well as in case of gaseous fuels, like LNG, LPG or others, being burned by the engine, the exhaust from this combustion process needs to be cleaned to comply with the existing pollutant regulations such as IMO Tier III rules.

Exhaust Gas Recirculation (EGR) is a technology not only for reducing NOx and to achieve Tier III limitations in Diesel Engines but also for controlling pre-ignition and knocking in gas or dual fuel engines.

For the stability of the combustion it is favourable to cool the recirculated exhaust gas. As for example disclosed in European application 21184689.4 the internal combustion engine may comprise an exhaust gas cooler. The cooler may be of tube and fin type. Exhaust gas may contact the fins and heat from the exhaust gas can be transferred to a cooling medium which may be guided in tubes. An appropriate cooler for a sufficient cooling of recirculated exhaust gas comprises a volume which may be difficult to provide on a ship.

It is an object of the present invention to avoid the drawbacks of the prior art and in particular to provide an internal combustion engine and a method for feeding fuel fluid to a combustion chamber of an internal combustion engine more economically than prior art solutions.

The object is achieved by the internal combustion engines and the method of operating an internal combustion engine according to the independent claims.

The internal combustion engine comprises at least one cylinder having an inner diameter of at least 200mm. The internal combustion engine is a large vessel engine or a stationary engine.

The internal combustion engine may be a low pressure fuel gas engine or dual-fuel engine. The engine hence may comprise a gas mode of operation and a liquid fuel mode of operation.

The at least one cylinder may have at least one an exhaust outlet. A discharge valve may be arranged in the exhaust outlet. The internal combustion engine may include an exhaust gas receiver connected to the cylinder via the exhaust outlet for discharging exhaust gas from the cylinder. The exhaust gas receiver may collect the exhaust gas of more than one cylinder.

The internal combustion engine may further comprise a scavenge gas receiver. The scavenge gas may enter the cylinder via scavenge air ports in the cylinder wall. The scavenging air ports may be arranged in the lower part of the cylinder and may provide for a longitudinally flushing.

The at least one cylinder has at least one fuel admission nozzle for injecting low pressure fuel fluid directly into the cylinder through a cylinder wall. Preferably, the cylinder comprises two fuel admission nozzles, for example arranged in the cylinder liner.

The fuel admission nozzle comprises at least one fuel fluid feedline fluidly connected or connectable to a fuel feed conduit and at least one inert gas feedline fluidly connected or connectable to an inert gas feed conduit.

The fuel fluid may be a cryogenic liquid, a non-cryogenic liquid or a non-cryogenic gas. Fluid fuel, such as LNG, is typically stored as a liquid in a pressurized container.

Fluid fuel may be guided to and/or in the fuel admission nozzle in form of a cryogenic liquid, a non-cryogenic liquid and/or as a non-cryogenic gas. The fuel liquid may vaporize on the way to the fuel admission nozzle and/or within the fuel admission nozzle and/or within the cylinder.

The fuel feed conduit in particular is a liquid natural gas feed conduit. The fuel feed conduit may also be a conduit for guiding non-cryogenic liquids and/or non-cryogenic gases, for example at ambient temperature.

Typically, the temperature of the fuel fluid is much lower than ambient temperature. The temperature of the inert gas is equal or higher than ambient temperature. The fuel admission nozzle may provide for a heat exchange between the fuel fluid and the inert gas within and/or in front of the fuel admission nozzle.

Preferably, the at least one fuel admission nozzle is arranged in the cylinder wall above the air inlets and below the exhaust valve.

The air inlets may be arranged on the height of half stroke or below. The air inlets may be arranged on a level closer to the bottom dead center of the piston stroke than to the height of half stroke.

For a longitudinally flushed two stroke engine the arrangement of the fuel admission nozzle in the cylinder wall for admission of a natural gas together with exhaust gas allows provides for bringing a higher mass fraction of the exhaust gas to locations in the cylinder where higher fuel mass fractions are. This allows to locate the exhaust gas in the cylinder where it is needed most to slow down the reaction processes.

At least one of the at least one inert gas feed conduit may be a feed conduit providing exhaust gas. In this case, the inert gas feed conduit is fluidly connected to a source for exhaust gas, typically an EGR path.

Additionally or alternatively at least one of the at least one inert gas feed conduit may be a feed conduit providing N₂, CO₂ or Argon. In this case, the inert gas feed conduit is fluidly connected to a source for N₂, CO₂ or Argon.

The fuel feed conduit and/or the inert gas feed conduit may comprise an adjustable valve. The internal combustion engine may comprise a control unit which may be configured for controlling the amount of fuel and/or inert gas by setting the respective flowrate via setting the respective valve. Fuel and/or inert gas may only be provided during a predetermined crank-angle of the combustion cycle. The ratio of the amount of fuel to the amount of inert gas may depend on the load of the engine as well as on other engine parameters and ambient conditions.

The internal combustion engine may comprise a system for exhaust gas recirculation with an EGR path. Typically, the EGR path of the exhaust gas recirculation system leads from the exhaust outlet of the cylinder to an air inlet of the cylinder, for example to a scavenge air inlet via a scavenge air receiver.

The at least one inert gas feed conduit may be fluidly connected to the EGR path, such that a part of recirculated exhaust gas is guidable into the cylinder via the fuel admission nozzle.

The internal combustion engine preferably further comprises at least one turbocharger having a turbine and a compressor.

The system for exhaust gas recirculation may be a low pressure system, wherein recirculated exhaust gas is guidable through the turbine of the turbocharger. Recirculated exhaust gas is guidable to the air inlet of the cylinder via the compressor of the turbocharger. In a low-pressure EGR system the turbocharger is arranged in the EGR path, such that the recirculated exhaust gas contributes to driving the turbocharger.

The EGR path leading from the exhaust outlet of the cylinder to the air inlet of the cylinder includes the turbine of a turbocharger and may include also the compressor of the turbocharger. Typically, exhaust gas is guidable to the air inlet of the cylinder by the turbocharger mixed with fresh air. Hence, the compressor of the turbocharger sucks in the exhaust gas to be recirculated and fresh air.

Typically, the EGR path comprises a junction, preferably downstream a turbine of a turbocharger, from which the exhaust gas may be guided either towards the air inlet of the cylinder, preferably to a compressor of a turbocharger, or towards an exhaust gas funnel.

Alternatively, the system for exhaust gas recirculation may be a high pressure system, wherein the exhaust gas is guided to the air inlet of the cylinder without passing the compressor, and preferably without passing the turbine of the turbocharger. An exhaust gas blower may be arranged in the EGR path.

The EGR path may be bifurcated such that the inert gas feed conduit branches off the main EGR path to guide a part of the recirculated exhaust gas to the inert gas feedline of the fluid fuel admission nozzle. A further part of the recirculated exhaust gas may be guided to the air inlet.

The EGR path may comprise an exhaust gas cooler and may comprise a demister. Preferably, the inert gas feed conduit branches off the EGR path upstream of the exhaust gas cooler.

Thus, not the complete exhaust gas to be recirculated needs to be guided through the exhaust gas cooler. The exhaust gas cooler may be configured for a smaller amount of exhaust gas than the amount to be recirculated in total.

The inert gas feed conduit may comprise a compressor to pressurize the inert gas to a similar pressure as the fuel fluid, for example to up to 10-15 bar.

The inert gas feed may be fed to the fluid fuel admission nozzle with a lower pressure than the pressure of the fuel fluid. In this case the feeding volume has to be larger, which may be achieved with a longer feeding time or with a greater feeding cross section.

The control unit may be configured for controlling the amount of exhaust gas recirculated to the air inlet and the amount of exhaust gas guided to the fluid fuel admission nozzle. The amount may be controlled by setting a valve arranged in the inert gas feed conduit and/or by setting the power of a compressor arranged in the inert gas feed conduit.

The inert gas feedline may be arranged in the fuel admission nozzle in such a way that inert gas may flow around the fuel fluid feedline.

Alternatively the fuel fluid feedline may be arranged in the fluid fuel admission nozzle in such a way that fuel fluid may flow around the inert gas feedline.

A central feedline may be surrounded by a plurality of concentrically arranged feedlines or by one annularly and concentrically arranged feedline.

The arrangement of the fuel fluid feedline and the inert gas feedline promotes the heat exchange between fuel and inert gas within the nozzle as well as the mixing of the fuel and the inert gas, which may take place within the cylinder right outside the nozzle.

The at least one fuel fluid feedline and the at least one inert gas feedline may merge within the fuel admission nozzle, such that fuel fluid and inert gas are mixed with the nozzle. The fuel admission nozzle preferably only comprises one outlet.

The cross section area of the at least one inert gas feedline may be equal to the cross section area of the at least fuel fluid feedline or may be up to seven times larger than the cross section area of the at least fuel fluid feedline.

Within this context the cross section area means the cross section area perpendicular to the direction of flow within the feedline, preferably at the entrance of the fuel admission nozzle.

Assuming a similar pressure of the introduced fuel fluid and inert gas the ratio of the cross-sections areas ensures a proper ratio of amounts of fuel fluid and inert gas to achieve a target temperature of the mixture, in particular to achieve a temperature of the exhaust gas within the cylinder that provides for stability of the combustion.

Typically, fuel fluid is heated and inert gas is cooled to a temperature of about 40°C.

The fuel admission nozzle may comprise additional cooling means, preferably at least one channel for guiding a cooling fluid.

The fluid fuel admission nozzle may be multihole-Venturi-nozzle, for example a six-hole-Venturi-mixer, wherein fuel fluid enters the mixer through a main inlet and exhaust gas enters through admission holes located at the throat at a 90 degree angle to the fuel fluid flow through the Venturi-mixer. The admission holes may be evenly spaced around the narrowest part of the throat.

The internal combustion engine may comprise a cooling device for cooling the inert gas, preferably arranged upstream of an inert gas feed conduit. In the cooling device, the inert gas, for example exhaust gas, may be precooled before reaching the fuel admission nozzle and before getting into contact with the fluid fuel.

Thus the temperature difference between the fuel and the inert gas may be reduced, such that more inert gas may be guided through the fuel admission nozzle to reach the target temperature. The amount of exhaust gas to be guided to the air inlet will be reduced. Hence the size of the exhaust gas cooler for cooling the exhaust gas to be guided to the air inlet may also be chosen smaller.

The cooling device may be formed by an exhaust gas cooler arranged in the EGR path or by a part of the exhaust gas cooler, such that the inert gas feed conduit branches off the EGR path downstream the exhaust gas cooler or downstream a part of the exhaust gas cooler.

The object of the inventions is also achieved by a fuel admission nozzle for a cylinder of an internal combustion engine as described above.

The fuel admission nozzle comprises at least one fuel fluid feedline connectable to a fuel fluid feed conduit and at least one inert gas feedline connectable to an inert gas feed conduit.

The fuel fluid feedline may be designed to enable or to favour vaporizing of a liquid gas. The fuel fluid feedline may be flared.

The fuel fluid feedline and the inert gas feedline may be formed as bores with a circular cross section. The cross section of the fuel fluid feedline may have diameter of 10-40mm, in particular 20mm or 38mm, at least on the entrance side of the fuel admission nozzle.

The ratio of the cross section of the fuel fluid feedline and the stroke volume per cylinder may be between 0.3 mm²/dm³ and 1.2 mm²/dm³, preferably between 0.4 mm²/dm³ and 0.8 mm²/dm³.

There may be one to seven inert gas feedlines having the same cross section as the fuel fluid feedline.

There may be one further inert gas feedline having a cross section which is equal to the cross section of the fuel fluid feedline or having a cross section up to seven times larger than the cross section of the fuel fluid feedline.

The object of the inventions is also achieved by a method for feeding fuel fluid to a combustion chamber of an internal combustion engine as described above using a fuel admission nozzle as described above. During admission of the fuel fluid an inert gas, such as exhaust gas, N₂, CO₂ or Argon, is introduced into the cylinder and the fuel fluid cools the inert gas. Preferably a fuel liquid vaporizes, more preferably within the fuel admission nozzle.

The ignitability of the combustion chamber contents or the supplied mixture of fuel and inert gas is reduced.

The fuel fluid and the inert gas are introduced into the cylinder by the same fuel admission nozzle.

Preferably, the inert gas to be cooled only flows in combination with the fuel fluid. Thus, the dwell time during the closing period of the fuel admission nozzle may increase the cooling effect.

The inert gas may be taken from an EGR path.

A first part of recirculated exhaust gas may be guided to at least one inert gas feedline of the fuel admission nozzle as the inert gas and a second part of recirculated exhaust gas may be guided to an air inlet of the internal combustion engine.

For operating an internal combustion engine as described above a first part of the total amount of exhaust recirculated into the cylinder may be cooled by the fuel fluid, when applied by a fuel admission nozzle as described above, and a second part of the recirculated exhaust gas may be cooled in an exhaust gas cooler.

The inert gas may be cooled during admission at least by 150°C-350°C.

Exhaust gas typically has a temperature of about 240°C - 460°C, in particular 370°C, when leaving the cylinder. After passing the turbine, the exhaust still has a temperature of about 200°C-280°C depending on the load and on the efficiency of the turbocharger.

The fuel fluid may be heated up by 120°C-230°C, preferably by 140°C-190°C, during admission.

Cryogenic fuel liquid may have a temperature of about -162°C or even colder, non-cryogenic fuel gas may have a temperature of -100°C. The target temperature of the mixture typically is between 20°C and 70°C, for example is 40°C.

When cooling a recirculated exhaust gas branched off upstream the turbine by a non-cryogenic fuel gas, almost equal parts of fuel gas and exhaust gas should be guided to the cylinder to achieve a mixing temperature of for example about 40°C.

When cooling a recirculated exhaust gas branched off downstream the turbine by a cryogenic fuel liquid, the amount of exhaust gas be guided to the cylinder should be almost seven times the amount of the cryogenic fuel liquid to achieve a mixing temperature of for example about 40°C.

The power of the exhaust gas cooler could be reduced by 5% up to 35%, depending on how much exhaust gas is branched off to the fuel admission nozzle. Hence a smaller exhaust gas cooler may be used which may save space in the engine room of a ship.

The object of the inventions is also achieved by a method for manufacturing a fuel admission nozzle as described above, wherein the fuel admission nozzle is produced by an additive process, such as a 3D-print process.

Additive processes allow for complex geometric shapes which favour heat transfer and mixing of fuel fluid and the inert gas.

Alternatively or additionally the fuel fluid feedline and the at least one inert gas feedline are formed in a nozzle body by an eroding technique, by a laser technique, by drilling or by milling.

In the following, the invention is further explained in embodiments by means of figures. Same reference numbers refer to functionally corresponding features.
- Figure 1:: shows a schematic view of a first example of a combustion engine;
- Figure 2:: shows a schematic view of a first example of a fuel admission nozzle in a sectional view;
- Figure 3:: shows a schematic view of a second example of a fuel admission nozzle in a sectional view;
- Figure 4:: shows a schematic view of a third example of a fuel admission nozzle in a sectional view;
- Figure 5:: shows a schematic view of a second example of a combustion engine;
- Figure 6:: shows a schematic view of a third example of a combustion engine.

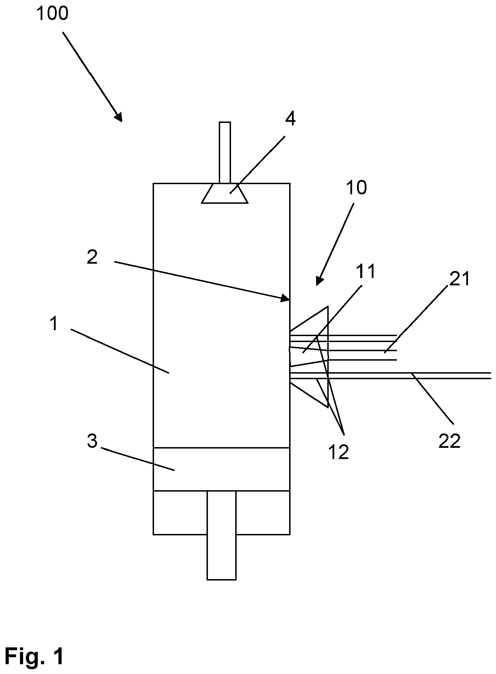

Figure 1 shows a schematic view of a first example of a large internal combustion engine 100 having a cylinder 1 with a piston 3 and an outlet valve 4. The internal combustion engine 100 comprises a fuel admission nozzle 10 for injecting low pressure fuel fluid directly into the cylinder 1 through a cylinder wall 2.

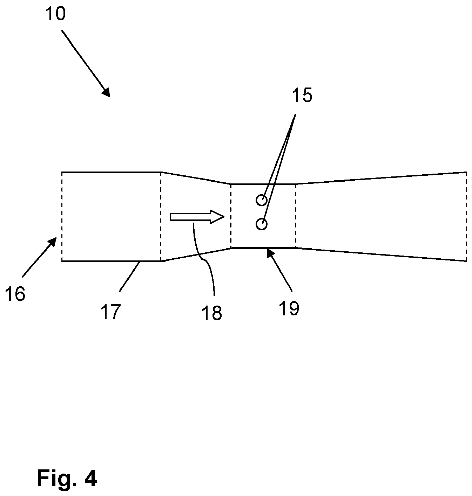

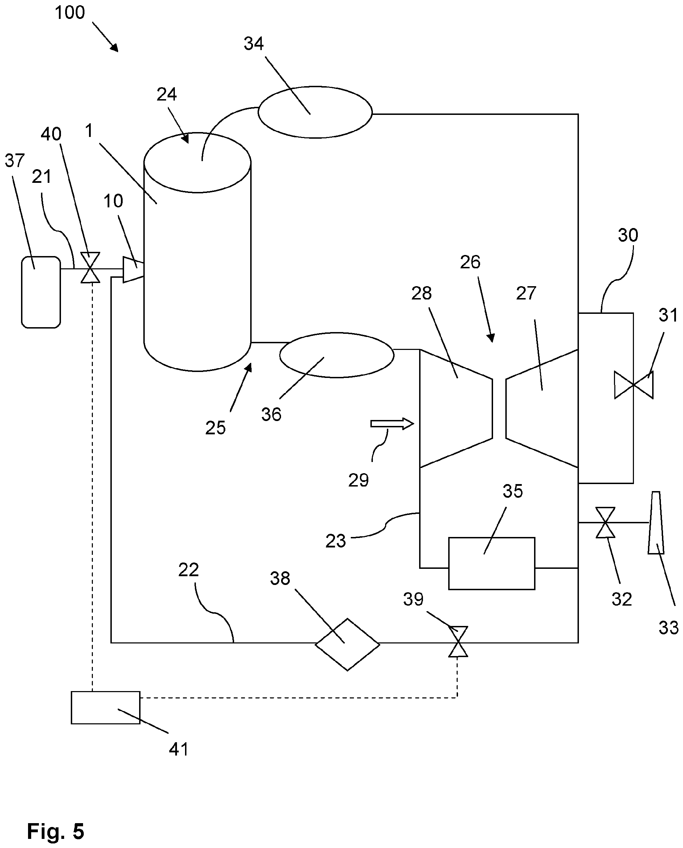

The fuel admission nozzle 10 comprises a fuel fluid feedline 11 fluidly connected to a fuel feed conduit 21. The fuel feed conduit may be fluidly connected to a fuel liquid container 37 (see figures 4, 5).

The fuel admission nozzle 10 comprises inert gas feedlines 12 fluidly connected an inert gas feed conduit 22.

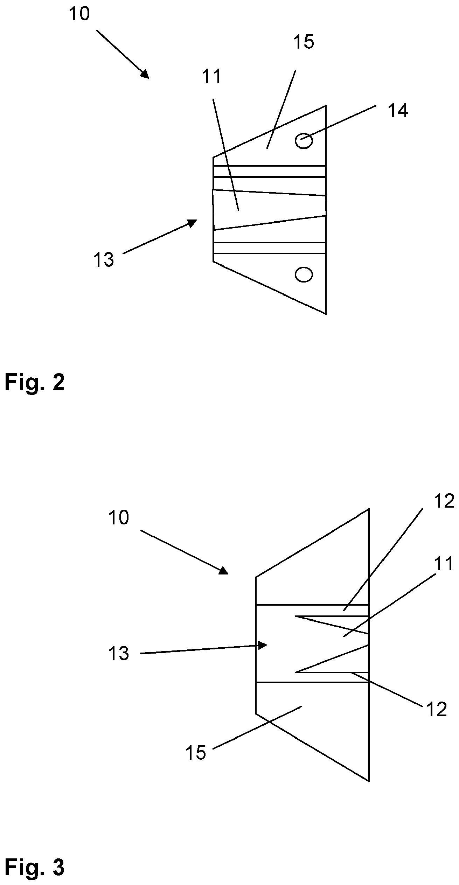

Figure 2 shows a schematic view of a first example of a fuel admission nozzle 10 in a sectional view. The fuel fluid feedline 11 is flared towards the outlet 13 to favour vaporizing of a liquid fluid.

The fuel admission nozzle 10 comprises a channel 14 arranged in the nozzle body 15 for guiding a cooling fluid and further cooling the inert gas.

Figure 3 shows a schematic view of a second example of a fuel admission nozzle 10 in a sectional view.

The fuel fluid feedline 11 and the inert gas feedlines 12 merge within the nozzle body 15. The inert gas and the fuel fluid mix within the fuel admission nozzle 10.

The fuel admission nozzle 10 only comprises one outlet 13.

Figure 4 shows a schematic view of a third example of a fuel admission nozzle 10 in a sectional view. The fuel admission nozzle 10 is six-hole-Venturi-mixer.

Fuel fluid may enter the mixer through a main inlet 16 of a central pipe 17. Exhaust has may enter through six admission holes 15 located at the throat 19 of a central pipe 17 at a 90 degree angle to the fuel fluid flow 18 through the Venturi-mixer. The admission holes 15 are evenly spaced around the narrowest part of the throat 19.

Figure 5 shows a schematic view of a second example of a large internal combustion engine 100 comprising a cylinder 1.

The internal combustion engine 100 comprises a system for exhaust gas recirculation with an EGR path 23 arranged between an exhaust outlet 24 and an air inlet 25 of the cylinder 1.

The internal combustion engine 100 comprises a turbocharger 26 with a turbine 27 and a compressor 28.

The system for exhaust gas recirculation is a low pressure system, wherein the recirculated exhaust gas is guidable to the air inlet 25 of the cylinder 1 via the compressor 28 of the turbocharger 26, where the exhaust gas is mixed with fresh air 29, and at least a part of the recirculated exhaust gas is guidable through the turbine 27 of the turbocharger 26.

Another part of the exhaust gas may bypass the turbocharger 26 and be guided through a turbine bypass 30, when an exhaust waste gate valve 31 is open.

The amount of recirculated exhaust gas may be controlled by setting a back pressure valve 32 arranged between the EGR path 23 and an exhaust gas funnel 33.

The exhaust gas is collected in an exhaust gas receiver 34. The EGR path 23 comprises an exhaust gas cooler 35. Recirculated exhaust gas and fresh air are guided to a scavenge air receiver 36.

An inert gas feed conduit 22 for guiding exhaust gas to the fuel admission nozzle 10 branches off the EGR path 23 downstream the turbine 27 and upstream the exhaust gas cooler 35. By setting a valve 39 the amount of exhaust gas branched off the EGR path 23 can be controlled.

The inert gas feed conduit 22 comprises a compressor 38 for pressurizing the exhaust gas guided to the fuel admission nozzle 10.

A fuel fluid conduit 21 guides fuel liquid from a container 37 to the fuel admission nozzle 10.

A control unit 41 controls the amount of fuel and/or inert gas guided to fuel admission nozzle 10 as well as the timing of the admission by setting the valve 39 in the inert gas feed conduit 22 and by setting a valve 40 in the fuel fluid conduit 21.

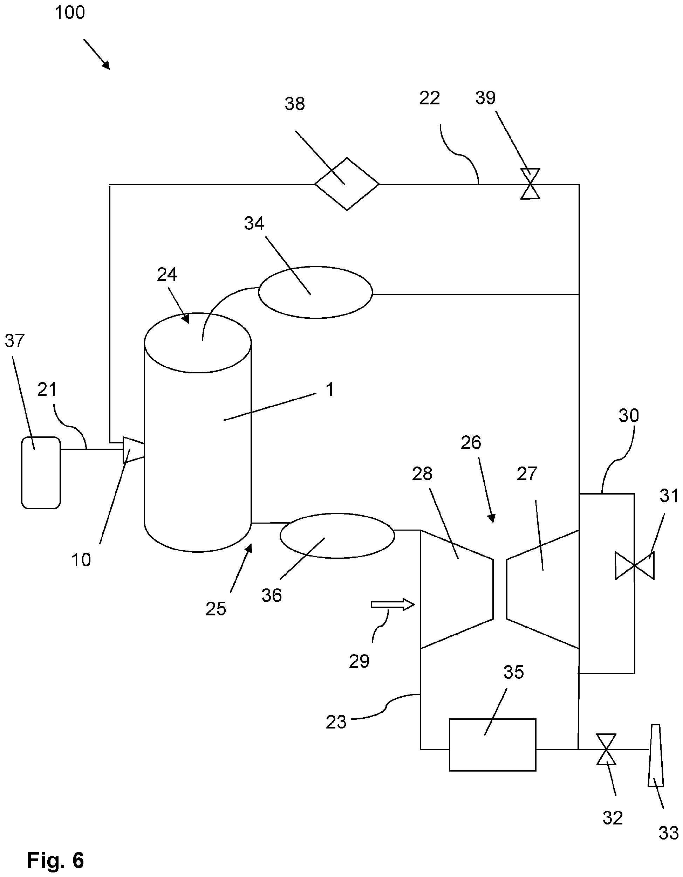

Figure 6 shows a schematic view of a third example of a large internal combustion engine 100 similar to the second example with a low pressure exhaust gas recirculation.

In this example the inert gas feed conduit 22 for guiding exhaust gas to the fuel admission nozzle 10 branches off the EGR path 23 upstream the turbine 27.

In this case the inert gas feed conduit 22 still may need a compressor 38, since the pressure of the exhaust gas upstream the turbocharger 26 is 3.5bar and the pressure can be to be elevated to 10-13 bar to reach the same pressure as the fuel fluid in the fuel admission nozzle 10.

## Claims

1. Internal combustion engine (100) having at least one cylinder (1), namely a large vessel engine with at least one cylinder (1) having an inner diameter of at least 200mm, preferably a low pressure fuel gas engine or dual-fuel engine with a cylinder (1),
the internal combustion engine (100) having at least one fuel fluid admission nozzle (10) for injecting low pressure fuel fluid directly into the cylinder (1) through a cylinder wall (2), **characterised in that**
the fuel admission nozzle (10) comprises
- at least one fuel fluid feedline (11) fluidly connected or connectable to a fuel feed conduit (21) and
- at least one inert gas feedline (12) fluidly connected or connectable to an inert gas feed conduit (22).

2. Internal combustion engine (100) according to claim 1,
wherein at least one of the at least one inert gas feed conduit (22) is a feed conduit providing exhaust gas and/or
at least one of the at least one inert gas feed conduit (22) is a feed conduit providing N₂, CO₂ or argon.

3. Internal combustion engine (100) according to claim 1 or 2, wherein the internal combustion engine (100) comprises a system (1) for exhaust gas recirculation with an EGR path (23) arranged between an exhaust outlet (24) and an air inlet (25), and the at least one inert gas feed conduit (22) is fluidly connected to the EGR path (23), such that a part of recirculated exhaust gas is guidable into the cylinder (1) via the fluid fuel admission nozzle (10).

4. Internal combustion engine (100) according to claim 1, 2 or 3, wherein the inert gas feedline (11) is arranged in the fluid fuel admission nozzle (10) in such a way that inert gas may flow around the fuel fluid feedline (12) or wherein the fuel fluid feedline (12) is arranged in the fluid fuel admission nozzle (10) in such a way that fuel fluid may flow around the inert gas feedline (11).

5. Internal combustion engine (100) according to one of the preceding claims,, wherein the cross section area of the at least one inert gas feedline (12) is equal to the cross section area of the at least fuel fluid feedline (11) or up to 7 times larger than the cross section area of the at least fuel fluid feedline (11).

6. Internal combustion engine (100) according to one of the preceding claims, wherein the at least one fuel fluid feedline (11) and the at least one inert gas feedline (12) merge within the fuel fluid admission nozzle (10), and the fuel fluid admission nozzle (10) preferably only comprises one outlet (13).

7. Internal combustion engine (100) according to one of the preceding claims, wherein the fuel fluid admission nozzle (10) comprises additional cooling means, preferably at least one channel (14) for guiding a cooling fluid.

8. Internal combustion engine (100) according to one of the preceding claims, wherein the internal combustion engine (100) comprises a cooling device for cooling inert gas, preferably arranged upstream of an inert gas feed conduit (22) .

9. A fuel fluid admission nozzle (10) for a cylinder (1) of an internal combustion engine (100) according to one of claims 1- 8 comprising at least one fuel fluid feedline (11) connectable to a fuel feed conduit (21) and at least one inert gas feedline (12) connectable to an inert gas feed conduit (22) .

10. A fuel fluid admission nozzle (10) according to claim 9, wherein the fuel fluid feedline (11) is designed to enable vaporizing of a liquid fluid.

11. A method for feeding fuel fluid to a combustion chamber () of an internal combustion engine (100) according to one of claims 1-8 using a fuel fluid admission nozzle (10) according to claim 9 or 10, wherein during admission of a fuel fluid an inert gas is introduced in to the cylinder (1) and the fuel fluid cools the inert gas, wherein the fuel fluid preferably vaporizes, more preferably within the fuel fluid admission nozzle (10).

12. A method according to claim 11, wherein a first part of recirculated exhaust gas is guided as an inert gas to at least one inert gas feedline (12) of the fuel admission nozzle (10) and a second part of recirculated exhaust gas is guided to an air inlet (25) of the internal combustion engine (100).

13. A method according to claim 11 or 12, wherein the inert gas is cooled during admission at least by 150°C-350°C and/or the fuel fluid is heated up by 140°C-190°C.
Method for manufacturing a fuel fluid admission nozzle (4) according to the claims 9 or 10, wherein the fuel fluid admission nozzle (4) is produced by a 3D-print process or
the fuel fluid feedline (11) and the at least one inert gas feedline (12) are formed in a nozzle body (15) by an eroding technique, by a laser technique, by drilling or by milling.
